(19) Europäisches Patentamt
European Patent Office
Office européen des brevets

(11) Publication number: **0 312 280 A2**

# (12) EUROPEAN PATENT APPLICATION

(21) Application number: 88309467.4

(51) Int. Cl.[4]: G02F 1/133 , C09D 3/82

(22) Date of filing: 11.10.88

(30) Priority: 13.10.87 JP 257527/87
11.08.88 JP 200340/88

(43) Date of publication of application:
19.04.89 Bulletin 89/16

(84) Designated Contracting States:
DE GB

(71) Applicant: Hitachi Chemical Co., Ltd.
1-1, Nishi-shinjuku 2-chome Shinjuku-ku
Tokyo 160(JP)

(72) Inventor: Uchimura, Shun-ichiro
16-5-203, Sukegawa-cho 5-chome
Hitachi-shi Ibaragi-ken(JP)

(74) Representative: Jenkins, Peter David et al
Page White & Farrer 5 Plough Place New
Fetter Lane
London EC4A 1HY(GB)

## (54) A composition for forming a coat for protecting transparent electrodes for liquid crystal display elements.

(57) A composition for forming a coat for protecting transparent electrodes for liquid crystal elements which composition is cured by low temperature heat treatment, and a liquid crystal display element using the composition are provided, which composition comprises

(a) a hydroxy-terminated polysiloxane expressed by the formula

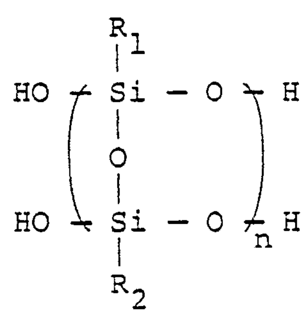

(I)

wherein $R_1$ and $R_2$ each represent hydrogen atom or a monovalent hydrocarbon radical and n represents a positive integer, and having a number average molecular weight of 2,000 to 500,000;

(b) an organic metal compound expressed by the formula

$M(OR')_m$ (II)

wherein M represents a metal element, $R'$ represents hydrogen atom or a monovalent hydrocarbon radical and m represents a positive integer, and

(c) a solvent.

EP 0 312 280 A2

# A composition for forming a coat for protecting transparent electrodes for liquid crystal display elements

This invention relates to a composition for forming a coat for protecting transparent electrodes for liquid crystal display elements and a liquid crystal display element using the composition. More particularly, it relates to the composition which is dry curable at low temperatures and a liquid crystal display element using the composition.

In the production of liquid crystal display elements, a process has so far been employed wherein an aligning coating consisting of an organic high-molecular substance such as polyimides is formed on substrates each having patterned transparent electrodes, followed by subjecting the coatings to an aligning treatment and then composing a display element. In recent years, however, as the size of liquid crystal display elements has been made larger, a problem of display failure has been raised, which failure is due to a conductive path formed between upper and lower substrates caused by the fact that contaminated matters having entered pinholes of the aligned coatings or the gap of the element injure or break through the aligned coatings.

Recently, as a means for solving the above-mentined problem, processes of forming an electrically insulating layer between the transparent electrodes and the aligned coatings have been proposed, and for example, the following processes have been employed:

(1) a process of forming an oxidized coating by spattering at low temperatures;

(2) a process of applying a solution containing an alkoxysilane or an alkoxytitanium and an organic high-molecular substance as a thickening agent according to a printing method or the like, followed by heat treatment to obtain an oxidized coating; etc.

However, such processes have the following drawbacks:
according to the process (1), an expensive apparatus of a vacuum system is required and the productivity is inferior due to batch treatment, and according to the process (2), a high temperature treatment is required for obtaining an oxidized coating; hence due to such high temperature treatment, a sheet resistance value of the transparent electrodes rises.

The present invention provides
a composition for forming a coat for protecting transparent electrodes for liquid crystal display elements, which composition comprises

(a) a hydroxy-terminated ladder polysiloxane expressed by the formula

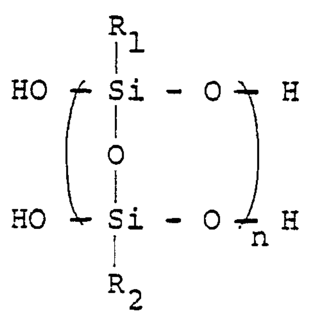

(I)

wherein $R_1$ and $R_2$ each represent hydrogen atom or a monovalent hydrocarbon radical and n represents a positive integer, and having a number average molecular weight of 2,000 to 500,000;

(b) an organic metal compound expressed by the formula

$M(OR')_m$ (II)

herein M represents a metal element, $R'$ represents hydrogen atom or a monovalent hydrocarbon radical and m represents a positive integer, and

(c) a solvent.

The present invention also provides liquid crystal element comprising the composition.

The present inventors have noticed as a result of extensive research that a composition having a specified, hydroxy-terminated ladder polysiloxane and a specified organic metal compound dissolved in a solvent is cured by heat treatment at low temperatures to form a superior coat for protecting transparent electrodes, and have achieved the present invention.

Embodiments of the present invention will now be described in greater detail by way of example only.

The hydroxy-terminated ladder polysiloxane expressed by the formula (I), used in the present invention is obtained for example by hydrolyzing phenyltrichlorosilane with a large amount of water, followed by subjecting the resulting hydrolyzate to dehydration-polycondensation in the presence of a carbodiimide as a catalyst in toluene, as disclosed in Japanese patent publication No. Sho 58-50657/1983. This case corresponds to the case where $R_1$ and $R_2$ in the above-mentioned formula (I) each represent phenyl group, but in the present invention, $R_1$ and $R_2$ each may be an alkyl group such as methyl group, ethyl group, etc., an aryl group such as chlorophenyl group, etc., hydrogen atom, besides the above phenyl group, and one kind or two kinds or more of these groups may be contained in the molecule. Further, these hydroxy-terminated ladder polysiloxanes may be used in admixture.

The hydroxy-terminated ladder polysiloxane has a number average molecular weight in the range of 2,000 to 500,000 preferably 10,000 to 50,000 in view of the viscosity, curability, etc. in the form of coating solution. Further, the concentration of the hydroxy-terminated ladder polysiloxane varies depending on its molecular weight and the coating thickness, but it is preferred to be in the range of 5 to 20% by weight based on the weight of the composition for forming the protective coat.

The organic metal compound expressed by the above-mentioned formula (II), used in the present invention includes $Ti(OR')_4$, $Zr(OR')_4$, $Ta(OR')_5$, $In(OR')_3$, $Si(OR')_4$, etc. Its concrete examples are tetraisopropoxytitanium, tetrabutoxyzirconium, tetraethoxyzirconium, pentaethoxytantalum, tributoxyindium, tetraethoxysilane, etc. These compounds react with the terminal hydroxyl groups of the above-mentioned hydroxy-terminated ladder polysiloxane to form a bond of Si-O-M and hence function as a low-temperature crosslinking agent. Further, it is possible to control the refractive index of the formed protective coat depending upon the amount of the organic metal compound used and also prevent the so-called nesa black phenomenon wherein the transparent electrode pattern is transparent at their "off" state. The amount of these organic metal compounds added is preferably in the range of 10 to 100 molar % based on the hydroxyl group concentration of the hydroxy-terminated ladder polysiloxane, in the case where the compounds are used mainly as a crosslinking agent, while it is preferred to use organic metal compounds such as those of titanium, zirconium, etc. in an amount of 10 to 100 molar % in terms of metal atom based on Si atom, in the case where the compounds are used mainly for controlling the refractive index.

The composition of the present invention can be obtained by dissolving the hydroxy-terminated ladder polysiloxane in a solvent at room temperature or higher, followed by adding to the solution, a predetermined amount of the above-mentioned organic metal compound and dissolving the mixture with stirring. As such a solvent, N,N-dimethylacetamide, N-methyl-2-pyrrolidone butyl cellosolve, hexylene glycol, butyl cellosolve, etc. can be used.

The composition of the present invention can be applied onto a substrate having a transparent electrode pattern formed thereon by means of a printing machine such as roll coater, a spinner coating machine, etc., followed by heat-treating the resulting substrate by means of an oven, a hot plate, etc. at 100° to 300°C, preferably 150° to 250°C to form a coat for protecting transparent electrodes. The heat-treating time is preferably in the range of about 30 to 90 minutes in the case of an oven, and in the range of about 10 to 30 minutes in the case of a hot plate. Further, the thickness of the formed protecting coat is preferably in the range of 500 to 2,000 Å in the aspect of dielectric strength.

The present invention will be described in more detail by way of Examples.

Example 1

A) Preparation of a hydroxy-terminated ladder polysiloxane:

Phenyltrichlorosilane ($C_6H_5SiCl_3$) (105.8 g, 0.5 mol) was dissolved in diethyl ether (200 mℓ). On the other hand, an ion exchange water (1 ℓ) was placed in a 2 ℓ capacity four-necked flask, followed by fixing a stirrer, a cooler and a thermometer, cooling the water down to 20°C or lower in an ice bath, dropwise adding the ether solution of phenyltrichlorosilane into the flask through a dropping funnel to carry out hydrolysis at a reaction temperature of 20°C or lower, finishing the addition in 4 hours, stopping agitation, placing the reaction liquid separated into two layers in a separating funnel, taking out the ether layer,

washing the ether layer with an ion exchange water until the washing water became neutral, drying the layer over anhydrous sodium sulfate over night, removing ether, placing the residue in a desiccator under reduced pressure and drying it at 60° C for two hours. The resulting white powder exhibited absorption of -OH at 3,500 $cm^{-1}$ and absorption of Si-O-Si at 1,130 and 1,135 $cm^{-1}$ according to IR spectra. Its number average molecular weight was about 1,000.

The above-mentioned hydrolyzate of white powder (10 g) was placed in a three-necked flask equipped with a reflux condenser, a stirrer and a thermometer, followed by placing toluene (30 mℓ) as a solvent therein, dissolving the hydryzate to form a uniform layer, placing dicyclohexylcarbodiimide (4.1 g) as a condensation catalyst in the above layer, dissolving it therein and reacting the mixture under reflux with stirring at 110° C for 2 hours. After the reaction, deposition of a urea derivative was observed in the reaction vessel. The reaction mixture was then allowed to cool down, followed by filtering off the urea derivative by suction, pouring it in methanol in an amount of 10 times the volume of the derivative to deposit a polymer, filtering off it and drying it under reduced pressure. The number average molecular weight of the polymer was 50,000 and absorption of -OH at 3,500 $cm^{-1}$ was observed in its IR spectra; thus the polymer was confirmed to be the aimed hydroxy-terminated polyphenyl ladder polysiloxane.

B) Preparation of a composition for forming a protective coat and its evaluation:

The hydroxy-terminated polyphenyl ladder siloxane obtained above (5 g) was placed in a four-necked flask equipped with a reflux condenser, a stirrer, a thermometer and a dropping funnel, followed by adding N,N-dimethylacetamide (60 g) and hexylene glycol (30 g) as solvents, dissolving the polysiloxane in the solvents with stirring, dropwise adding a 10% by weight isopropyl alcohol solution (5 g) of tetraisopropoxytitanium through the dropping funnel with stirring and mixing these with stirring at room temperature for about 2 hours to obtain the aimed composition for forming a protective coat.

The concentration of the resulting composition was 5.1% by weight (after dried at 200° C for 2 hours) and its viscosity at 25° C was 40 cps.

The thus obtained composition was applied onto a silicon wafer by means of a spinner, followed by heat-treating the resulting material at 150° C for one hour and further heat-treating at 300° C for one hour to form a coat of 2,000 Å thick. An Aℓ electrode of 2 mm thick was deposited onto the coat and its dielectric breakdown voltage was measured to exhibit about 100 V.

The above-mentioned composition was then applied onto a glass substrate of 300 × 150 mm having a transparent electrode pattern of 640 × 200 dots thereon, according to a printing process, followed by subjecting the resulting substrate to the same heat treatment as above to form a coat of 1,000 Å thick, forming a polyimide aligned coat of 800 Å on the coat, composing a cell and observing its aligned state at the time of impressing a voltage. As a result, alignment inferiority due to a conductive path between the upper and lower substrates and nesa black were not observed.

## Example 2

A hydroxy-terminated polymethyl ladder siloxane having a number average molecular weight of 20,000 was prepared using methyltrichlorosilane ($CH_3SiCℓ_3$) and in the same manner as in Example 1 A), followed by placing the polymer (5 g) in a flask same as in Example 1, adding N-methyl-2-pyrrolidone (60 g) and butyl cellosolve (30 g) as solvents, dissolving the polymer in the solvents with stirring, further dropwise adding a 10% by weight butyl cellosolve solution (5 g) of tetrabutoxyzirconium through a dropping funnel with stirring and mixing these at room temperature for about 2 hours with stirring to obtain a composition for a protective coat. The concentration of the resulting composition was 4.9% by weight (when dried at 200° C for 2 hours) and its viscosity was 20 cps at 25° C.

The characteristics of the coat from the composition was evaluated in the same manner as in Example 1 B). As a result, its dielectric strength was 45 V/1000Å , and conduction inferiority in the cell and nesa black were not observed.

## Example 3

A hydroxy-terminated polymethyl ladder siloxane having a number average molecular weight of 20,000 was prepared using methyltrichlorosilane ($CH_3SiCℓ_3$) and in the same manner as in Example 1 A), followed

by placing the polymer (5 g) in the same flask as in Example 1, adding N-methyl-2-pyrrolidone (60 g) and butyl cellosolve (30 g) as solvents, dissolving the polymer in the solvents with stirring, further dropwise adding to the solution, a 2% by weight butyl cellosolve solution (5 g) of tetraethoxysilane through the dropping funnel with stirring and mixing these at room temperature for about 2 hours with stirring to obtain a composition for a protective coat. The concentration of the resulting composition was 4.8% by weight (when dried at 200°C for 2 hours), and its viscosity at 25°C was 18 cps.

The characteristics of the coat from the composition were evaluated in the same manner as in Example 1 B). As a result, its dielectric strength was 45 V/1,000 Å and conduction inferiority in the cell was not observed.

The preferred embodiments of the present invention can provide a composition for forming a coating for protecting transparent electrodes for liquid crystal display elements, which composition has overcome the drawbacks of the above-mentioned prior art; is cured by heat treatment at low temperatures; does not raise the sheet resistance value of the transparent electrodes; and forms a superior protective coat on the transparent electrodes, and a liquid crystal display element using the composition as a protective coat on the transparent electrodes.

According to the composition for forming a coat for protecting transparent electrodes for liquid crystal display elements of the present invention, it is possible to form a superior coat for protecting transparent electrodes according to a simple coating process and by curing by heat treatment at low temperatures and also to prevent alignment inferiority due to conduction between upper and lower substrates, nesa black, etc.

## Claims

1. A composition for forming a coating for protecting transparent electrodes for liquid crystal display elements, which comprises:

(a) a hydroxy-terminated ladder polysiloxane expressed by the formula

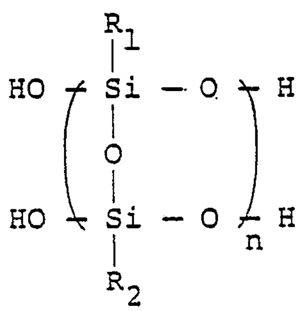

(I)

wherein $R_1$ and $R_2$ each represent hydrogen atom or a monovalent hydrocarbon radical and n represents a positive integer, and having a number average molecular weight of 2,000 to 500,000;

(b) an organic metal compound expressed by the formula

$M(OR')_m$   (II)

wherein M represents a metal element, R′ represents hydrogen atom or a monovalent hydrocarbon radical and m represents a positive integer, and

(c) a solvent.

2. A liquid crystal display element comprising a composition as set forth in claim 1.